# EUROPEAN PATENT APPLICATION

(11) **EP 4 632 564 A1**
(43) Date of publication of application: **15.10.2025**
(21) Application number: 24773996.4
(22) Date of filing: 14.03.2024
(51) Int. Cl.: G06F 9/451

(54) **VIRTUAL AVATAR DISPLAY METHOD AND APPARATUS, AND ELECTRONIC DEVICE**

(30) Priority: 21.03.2023 CN 202310306108
(71) Applicant: Huawei Technologies Co., Ltd., Shenzhen, Guangdong 518129 (CN)
(72) Inventor: LI, Minhao, Shenzhen, Guangdong 518129 (CN); LIU, Xuezhi, Shenzhen, Guangdong 518129 (CN)
(74) Representative: Epping - Hermann - Fischer
(86) International application number: PCT/CN2024/081623
(87) International publication number: WO 2024/193430

(57) **Abstract**

This application provides a method and an apparatus for displaying a virtual image, and an electronic device. In this method, a first electronic device may determine an action style of the virtual image based on at least one of time information, schedule information, application running data of the first electronic device, and running data of a second electronic device, and display the virtual image on a lock screen interface of the first electronic device. According to the method for displaying a virtual image in this application, different action styles of the virtual image can be determined based on status information indicating a status of a user, so that the virtual image can reflect the status of the user more intelligently and vividly, help the user complete personalized expression, and enhance interest of the virtual image.

## Description

This application claims priority to Chinese Patent Application No. 202310306108.2, filed with the China National Intellectual Property Administration on March 21, 2023 and entitled "METHOD AND APPARATUS FOR DISPLAYING VIRTUAL IMAGE AND ELECTRONIC DEVICE", which is incorporated herein by reference in its entirety.

### TECHNICAL FIELD

Embodiments of this application relate to the field of electronic devices, and more specifically, to a method and an apparatus for displaying a virtual image, and an electronic device.

### BACKGROUND

With the development of science and technology, electronic devices such as a smartphone, a smart screen, and a personal computer may provide various personalized services for people. Displaying a virtual image that expresses a status of a user on a user interface of an electronic device also adds much interest to a service process of the electronic device, and intelligence, flexibility, matching, and the like of the virtual image are referred to as important criteria for measuring the virtual image. Currently, the virtual image on the electronic device is usually presented in a single style or action. This cannot meet the user's requirement of personalized expression.

Therefore, how to provide a method for displaying a virtual image to flexibly display different states of the virtual image based on a current scenario of a user, so as to meet the user's requirement of personalized expression and enhance interest of virtual image display is a problem to be urgently resolved at present.

### SUMMARY

Embodiments of this application provide a method and an apparatus for displaying a virtual image, and an electronic device. In this method, different states of the virtual image may be flexibly displayed based on a current scenario, to satisfy a user's requirement of personalized expression.

According to a first aspect, a method for displaying a virtual image is provided, where the method is applied to a first electronic device, and the method includes: displaying a first interface, where the first interface is a lock screen interface; determining an action style of the virtual image based on status information, where the status information includes at least one of the following: time information, schedule information, application running data of the first electronic device, and running data of a second electronic device; and displaying the virtual image on the first interface based on the action style of the virtual image.

For example, the first electronic device may be an electronic device such as a smartphone, a personal computer, or a tablet computer. The action style of the virtual image may include a style of the virtual image and an action of the virtual image, and the style of the virtual image corresponds to the action of the virtual image.

With reference to the first aspect, in some implementations of the first aspect, the lock screen interface is an interface when the screen is locked, and may be a screen-on interface when the screen is locked, or may be an always on display screen.

Based on the foregoing solution, the time information, the schedule information, the application running data of the first electronic device, and the running data of the second electronic device may be used to determine a status of the user, for example, the user is in a motion state, a sleep state, or a working state. The virtual image displayed by the electronic device based on the status information can reflect the status of the user more intelligently and vividly, help the user complete personalized expression, and enhance interest of displaying the virtual image.

With reference to the first aspect, in some implementations of the first aspect, before displaying the virtual image on the first interface, the method further includes: displaying a second interface in response to a first operation of a user, where the second interface is used to set the virtual image. For example, the user may further set the virtual image through the second interface. Specifically, an action, a display time or cycle, or the like of the virtual image may be set, and whether display of the virtual image needs to be associated with schedule information, an application, another electronic device, or the like may also be set.

With reference to the first aspect, in some implementations of the first aspect, when the status information is the time information, before determining the action style of the virtual image based on the status information, the method further includes: setting at least one time period, where the at least one time period corresponds to the action style of the virtual image, the action style of the virtual image includes a style of the virtual image and an action of the virtual image, and the style of the virtual image corresponds to the action of the virtual image.

For example, before determining the action style of the virtual image based on the time information, the first electronic device may divide time of each day into a specific quantity of time periods, and each time period corresponds to a specific style of the virtual image. In addition, the styles of the virtual image may also correspond to different actions of the virtual image. The time information may be understood as current actual time. The first electronic device may determine a time period to which the current actual time belongs, and further determine a style that is of the virtual image and that corresponds to the time period and an action of the virtual image, to determine the action style that is of the virtual image and that corresponds to the current actual time.

With reference to the first aspect, in some implementations of the first aspect, setting the at least one time period includes: presetting the at least one time period; or customizing, by the user, the at least one time period.

For example, the first electronic device may preset a specific quantity of time periods, or may determine a specific quantity of time periods based on user customization.

It should be noted that, a larger quantity of time periods may indicate a corresponding larger quantity of styles of the virtual image and actions of the virtual image that may be refined, to display the virtual image more flexibly.

With reference to the first aspect, in some implementations of the first aspect, when the user customizes the at least one time period, the method further includes: displaying a third interface in response to an operation of the user on a first setting control on the second interface, where the third interface displays a second setting control; displaying a fourth interface in response to an operation of the user on the second setting control, where the fourth interface displays a first action control and a third setting control; and displaying a fifth interface in response to an operation of the user on the first action control and an operation of the user on the third setting control, where the fifth interface displays a preview of the virtual image.

For example, when the first electronic device determines the time period in a user-customized manner, the user may set parameters such as an action, a time period, and a display cycle of the virtual image on a user interface of the first electronic device in an interactive manner. This facilitates displaying a virtual image that meets the user's personalized requirement.

With reference to the first aspect, in some implementations of the first aspect, when the status information is the schedule information, before determining the action style of the virtual image based on the status information, the method further includes: obtaining the schedule information, where the schedule information includes time information and user behavior information; and determining the action style of the virtual image based on the status information includes: when the time information matches current time, determining that the action style of the virtual image is an action style that matches the user behavior information.

For example, before the first electronic device obtains the action style of the virtual image based on the schedule information, the first electronic device may automatically obtain the schedule information by using a system. The time information in the schedule information may be a time point or a time period. The user behavior information in the schedule information may be a schedule of the user at the time point or in the time period, for example, a specific behavior such as cooking or watching a movie.

With reference to the first aspect, in some implementations of the first aspect, when the status information is the schedule information, before determining the action style of the virtual image based on the status information, the method further includes: The first electronic device obtains the schedule information in response to an operation of the user on a fourth setting control on the second interface.

For example, before the first electronic device determines the action style of the virtual image based on the schedule information, the first electronic device obtains the schedule information based on user settings. The schedule information may be a schedule that is pre-recorded by the user in the first electronic device, for example, breakfast from 7:00 to 8:00. When the first electronic device determines that the current schedule is breakfast, the first electronic device may display a virtual image of an action style "have breakfast".

With reference to the first aspect, in some implementations of the first aspect, when the status information is the application running data of the first electronic device, before determining the action style of the virtual image based on the status information, the method further includes: obtaining the application running data of the first electronic device, where the application running data of the first electronic device includes status information about using an application of the first electronic device by a user; and determining the action style of the virtual image based on the status information includes: when the application of the first electronic device runs, determining that the action style of the virtual image is an action style that matches the status information about using the application of the first electronic device by the user.

For example, before the first electronic device determines the action style of the virtual image based on the application running data of the first electronic device, the first electronic device may directly obtain the application running data of the first electronic device by using the system. The status information about using the application of the first electronic device by the user may reflect a current state of the user. For example, the user is using a music application to play music, which reflects that the user is listening to music.

With reference to the first aspect, in some implementations of the first aspect, when the status information is the application running data of the first electronic device, before determining the action style of the virtual image based on the status information, the method further includes: The first electronic device obtains the application running data of the first electronic device in response to an operation of the user on a fifth setting control on the second interface.

For example, before the first electronic device determines the action style of the virtual image based on the application running data of the first electronic device, the first electronic device may obtain the application running data of the first electronic device based on user settings. The application running data of the first electronic device may reflect the current state of the user. For example, a music application carried on the first electronic device is playing music, which corresponds to a state in which the user is listening to songs. The first electronic device may display a virtual image of an action style "listen to songs".

With reference to the first aspect, in some implementations of the first aspect, when the status information is the running data of the second electronic device, before determining the action style of the virtual image based on the status information, the method further includes: obtaining the running data of the second electronic device, where the running data of the second electronic device includes status information about using the second electronic device by a user; and determining the action style of the virtual image based on the status information includes: when the second electronic device runs, determining that the action style of the virtual image is an action style that matches the status information about using the second electronic device by the user. For example, before the first electronic device determines the action style of the virtual image based on the running data of the second electronic device, the first electronic device may automatically obtain the running data of the second electronic device by using the system. The status information about using the second electronic device by the user may reflect a status of the user. For example, the user is driving an in-vehicle infotainment terminal, which reflects a driving state of the user.

With reference to the first aspect, in some implementations of the first aspect, when the status information is the running data of the second electronic device, before determining the action style of the virtual image based on the status information, the method further includes: The first electronic device obtains the running data of the second electronic device in response to an operation of the user on a sixth setting control on the second interface, where the second electronic device is associated with the first electronic device.

For example, before the first electronic device determines the action style of the virtual image based on the running data of the second electronic device, the first electronic device obtains the running data of the second electronic device based on user settings. The running data of the second electronic device may reflect the current state of the user. For example, the second electronic device is a smart screen associated with the first electronic device, and the second electronic device is playing a video, which corresponds to a state in which the user is watching the video by using the smart screen. The first electronic device may display a virtual image of an action style "watch a video by using the smart screen".

According to a second aspect, a first electronic device is provided, including one or more processors; and one or more memories, where the one or more memories store one or more computer programs, the one or more computer programs include instructions, and when the instructions are executed by the one or more processors, the first electronic device is enabled to perform the following steps: displaying a first interface, where the first interface is a lock screen interface; determining an action style of the virtual image based on status information, where the status information includes at least one of the following: time information, schedule information, application running data of the first electronic device, and running data of a second electronic device; and displaying the virtual image on the first interface based on the action style of the virtual image.

With reference to the second aspect, in some implementations of the second aspect, when the instructions are executed by the one or more processors, the first electronic device is enabled to perform the following step: before displaying the virtual image on the first interface, displaying a second interface in response to a first operation of a user, where the second interface is used to set the virtual image.

With reference to the second aspect, in some implementations of the second aspect, when the instructions are executed by the one or more processors, the first electronic device is enabled to perform the following step: when the status information is the time information, before determining the action style of the virtual image based on the status information, setting at least one time period, where the at least one time period corresponds to the action style of the virtual image, the action style of the virtual image includes a style of the virtual image and an action of the virtual image, and the style of the virtual image corresponds to the action of the virtual image. With reference to the second aspect, in some implementations of the second aspect, the at least one time period is set, and when the instructions are executed by the one or more processors, the first electronic device is enabled to perform the following step: presetting the at least one time period; or customizing, by the user, the at least one time period.

With reference to the second aspect, in some implementations of the second aspect, when the instructions are executed by the one or more processors, the first electronic device is enabled to perform the following steps: when the user customizes the at least one time period, displaying a third interface in response to an operation of the user on a first setting control on the second interface, where the third interface displays a second setting control; displaying a fourth interface in response to an operation of the user on the second setting control, where the fourth interface displays a first action control and a third setting control; and displaying a fifth interface in response to an operation of the user on the first action control and an operation of the user on the third setting control, where the fifth interface displays a preview of the virtual image.

With reference to the second aspect, in some implementations of the second aspect, when the instructions are executed by the one or more processors, the first electronic device is enabled to perform the following steps: when the status information is the schedule information, before determining the action style of the virtual image based on the status information, obtaining the schedule information, where the schedule information includes time information and user behavior information; and when the time information matches current time, determining that the action style of the virtual image is an action style that matches the user behavior information.

With reference to the second aspect, in some implementations of the second aspect, when the instructions are executed by the one or more processors, the first electronic device is enabled to perform the following step: When the status information is the schedule information, before determining the action style of the virtual image based on the status information, the first electronic device obtains the schedule information in response to an operation of the user on a fourth setting control on the second interface.

With reference to the second aspect, in some implementations of the second aspect, when the instructions are executed by the one or more processors, the first electronic device is enabled to perform the following steps: when the status information is the application running data of the first electronic device, before determining the action style of the virtual image based on the status information, obtaining the application running data of the first electronic device, where the application running data of the first electronic device includes status information about using an application of the first electronic device by a user; and when the application of the first electronic device runs, determining that the action style of the virtual image is an action style that matches the status information about using the application of the first electronic device by the user.

With reference to the second aspect, in some implementations of the second aspect, when the instructions are executed by the one or more processors, the first electronic device is enabled to perform the following step: When the status information is the application running data of the first electronic device, before determining the action style of the virtual image based on the status information, the first electronic device obtains the application running data of the first electronic device in response to an operation of the user on a fifth setting control on the second interface.

With reference to the second aspect, in some implementations of the second aspect, when the instructions are executed by the one or more processors, the first electronic device is enabled to perform the following steps: when the status information is the running data of the second electronic device, before determining the action style of the virtual image based on the status information, obtaining the running data of the second electronic device, where the running data of the second electronic device includes status information about using the second electronic device by a user; and when the second electronic device runs, determining that the action style of the virtual image is an action style that matches the status information about using the second electronic device by the user.

With reference to the second aspect, in some implementations of the second aspect, when the instructions are executed by the one or more processors, the first electronic device is enabled to perform the following step: When the status information is the running data of the second electronic device, before determining the action style of the virtual image based on the status information, the first electronic device obtains the running data of the second electronic device in response to an operation of the user on a sixth setting control on the second interface, where the second electronic device is associated with the first electronic device.

According to a third aspect, an apparatus for displaying a virtual image is provided, where the apparatus is a first electronic device or an apparatus having some or all functions of the first electronic device, and the apparatus includes: a processing module, configured to display a first interface, where the first interface is a lock screen interface; the processing module is further configured to determine an action style of the virtual image based on status information, where the status information includes at least one of the following: time information, schedule information, application running data of the first electronic device, and running data of a second electronic device; and the processing module is further configured to display the virtual image on the first interface based on the action style of the virtual image.

With reference to the third aspect, in some implementations of the third aspect, the processing module is further configured to: before displaying the virtual image on the first interface, display a second interface in response to a first operation of a user, where the second interface is used to set the virtual image.

With reference to the third aspect, in some implementations of the third aspect, when the status information is the time information, before determining the action style of the virtual image based on the status information, the processing module is further configured to: set at least one time period, where the at least one time period corresponds to the action style of the virtual image, the action style of the virtual image includes a style of the virtual image and an action of the virtual image, and the style of the virtual image corresponds to the action of the virtual image.

With reference to the third aspect, in some implementations of the third aspect, the processing module is further configured to: preset the at least one time period; or customize, by the user, the at least one time period.

With reference to the third aspect, in some implementations of the third aspect, the processing module is further configured to display a third interface in response to an operation of the user on a first setting control on the second interface, where the third interface displays a second setting control; the processing module is further configured to display a fourth interface in response to an operation of the user on the second setting control, where the fourth interface displays a first action control and a third setting control; and the processing module is further configured to display a fifth interface in response to an operation of the user on the first action control and an operation of the user on the third setting control, where the fifth interface displays a preview of the virtual image.

With reference to the third aspect, in some implementations of the third aspect, when the status information is the schedule information, before determining the action style of the virtual image based on the status information, the processing module is further configured to obtain the schedule information, where the schedule information includes time information and user behavior information; and the processing module is further configured to: when the time information matches current time, determine that the action style of the virtual image is an action style that matches the user behavior information.

With reference to the third aspect, in some implementations of the third aspect, when the status information is the schedule information, before determining the action style of the virtual image based on the status information, the processing module is further configured to: obtain, by the first electronic device, the schedule information in response to an operation of the user on a fourth setting control on the second interface.

With reference to the third aspect, in some implementations of the third aspect, when the status information is the application running data of the first electronic device, before determining the action style of the virtual image based on the status information, the processing module is further configured to obtain the application running data of the first electronic device, where the application running data of the first electronic device includes status information about using an application of the first electronic device by a user; and the processing module is further configured to: when the application of the first electronic device runs, determine that the action style of the virtual image is an action style that matches the status information about using the application of the first electronic device by the user.

With reference to the third aspect, in some implementations of the third aspect, when the status information is the application running data of the first electronic device, before determining the action style of the virtual image based on the status information, the processing module is further configured to: obtain, by the first electronic device, the application running data of the first electronic device in response to an operation of the user on a fifth setting control on the second interface.

With reference to the third aspect, in some implementations of the third aspect, when the status information is the running data of the second electronic device, before determining the action style of the virtual image based on the status information, the processing module is further configured to obtain the running data of the second electronic device, where the running data of the second electronic device includes status information about using the second electronic device by a user; and the processing module is further configured to: when the second electronic device runs, determine that the action style of the virtual image is an action style that matches the status information about using the second electronic device by the user.

With reference to the third aspect, in some implementations of the third aspect, when the status information is the running data of the second electronic device, before determining the action style of the virtual image based on the status information, the processing module is further configured to: obtain, by the first electronic device, the running data of the second electronic device in response to an operation of the user on a sixth setting control on the second interface, where the second electronic device is associated with the first electronic device.

According to a fourth aspect, an apparatus for displaying a virtual image is provided, including: a processor coupled to a memory, where the memory is configured to store a computer program, and the processor is configured to run the computer program, so that the apparatus for displaying a virtual image performs the method according to any one of the first aspect and the possible implementations of the first aspect.

With reference to the fourth aspect, in some implementations of the fourth aspect, the apparatus further includes one or both of the memory and a transceiver, and the transceiver is configured to receive a signal and/or send a signal.

According to a fifth aspect, a computer-readable storage medium is provided. The computer-readable storage medium includes a computer program or instructions. When the computer program or instructions are run on a computer, the method according to any one of the first aspect and the possible implementations of the first aspect is performed.

According to a sixth aspect, a computer program product is provided. The computer program product includes a computer program or instructions. When the computer program or instructions are run on a computer, the method according to any one of the first aspect and the possible implementations of the first aspect is performed.

According to a seventh aspect, a computer program is provided. When the computer program is run on a computer, the method according to any one of the first aspect and the possible implementations of the first aspect is performed.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of displaying a virtual image based on a time period according to an embodiment of this application;
FIG. 4 is a diagram of a specific action of a get-up style according to an embodiment of this application;
FIG. 5 is a diagram of a specific action of a busy style according to an embodiment of this application;
FIG. 6 is a diagram of a specific action of a leisure style according to an embodiment of this application;
FIG. 7 is a diagram of a specific action of a sleep style according to an embodiment of this application;
FIG. 8 is a diagram of displaying a virtual image based on a time period according to an embodiment of this application;
FIG. 9(a), FIG. 9(b), FIG. 9(c), and FIG. 9(d) are a diagram of a manner of customizing a virtual image according to an embodiment of this application;
FIG. 10(a), FIG. 10(b), and FIG. 10(c) are a diagram of displaying a virtual image based on a user schedule according to an embodiment of this application;
FIG. 11(a) and FIG. 11(b) are a diagram of displaying a virtual image based on a running condition of an application according to an embodiment of this application;
FIG. 12(a) and FIG. 12(b) are a diagram of displaying a virtual image based on a running condition of an associated device according to an embodiment of this application; and
FIG. 13 is a schematic flowchart of a method for displaying a virtual image according to an embodiment of this application.

### DESCRIPTION OF EMBODIMENTS

The following describes the technical solutions in embodiments of this application with reference to the accompanying drawings.

Terms used in the following embodiments are merely intended to describe specific embodiments, but are not intended to limit this application. The terms "one", "a", "the" and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more than two. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner.

The following describes an electronic device, a user interface used for the electronic device, and embodiments used for using the electronic device. In some embodiments, the electronic device may be a portable electronic device that further includes another function such as a personal digital assistant function and/or a music player function, for example, a mobile phone, a tablet computer, or a wearable electronic device (for example, a smartwatch) that has a wireless communication function. An example embodiment of the portable electronic device includes but is not limited to a portable electronic device provided with iOS^{®}, Android^{®}, Microsoft^{®}, or another operating system. The portable electronic device may alternatively be another portable electronic device, for example, a laptop (laptop) or the like. It should be further understood that, in some other embodiments, the foregoing electronic device may not be the portable electronic device but a desktop computer. In some other embodiments, the electronic device may be an instrument for measurement, such as an oscilloscope.

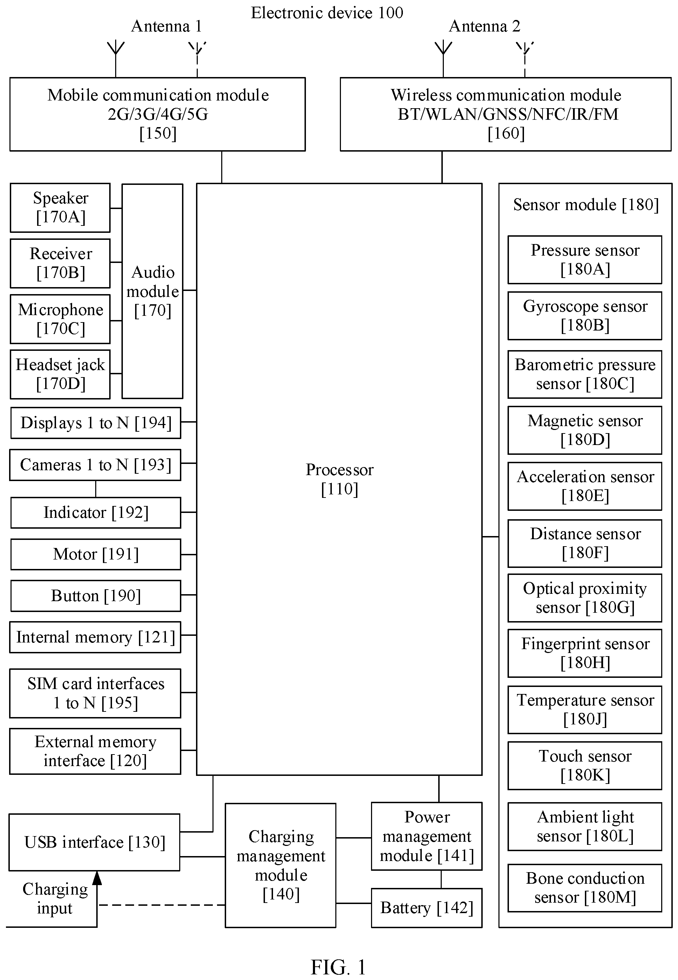

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the instructions or the data may be directly invoked from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communications bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information. The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a mini LED, a micro LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. Applications such as intelligent cognition of the electronic device 100, for example, image recognition, facial recognition, speech recognition, and text understanding, may be implemented through the NPU.

The external memory interface 120 may be configured to connect to an external storage card, for example, a Micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, or may include a non-volatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to acquire a sound signal and further implement a noise reduction function. In some other embodiments, three, four, or more microphones 170C may alternatively be disposed in the electronic device 100, to acquire a sound signal, reduce noise, identify a sound source, implement a directional recording function, and the like.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations performed at a same touch position but having different touch operation intensities may correspond to different operation instructions. For example, when a touch operation whose touch operation intensity is greater than or equal to a first pressure threshold is performed on an icon of an alarm clock application, an instruction for creating an alarm clock is executed.

The fingerprint sensor 180H is configured to acquire a fingerprint. The electronic device 100 may implement, by using an acquired fingerprint characteristic, fingerprint unlocking, accessing an application lock, fingerprint photographing, answering an incoming call by using a fingerprint, and the like. For example, when a mobile phone detects a touch operation of a user on a lock screen interface, the mobile phone may collect fingerprint information of the user through the fingerprint sensor 180H, and match the collected fingerprint information with fingerprint information preset in the mobile phone. If matching succeeds, the mobile phone may enter a non-lock screen interface from the lock screen interface.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and at a position different from that of the display 194.

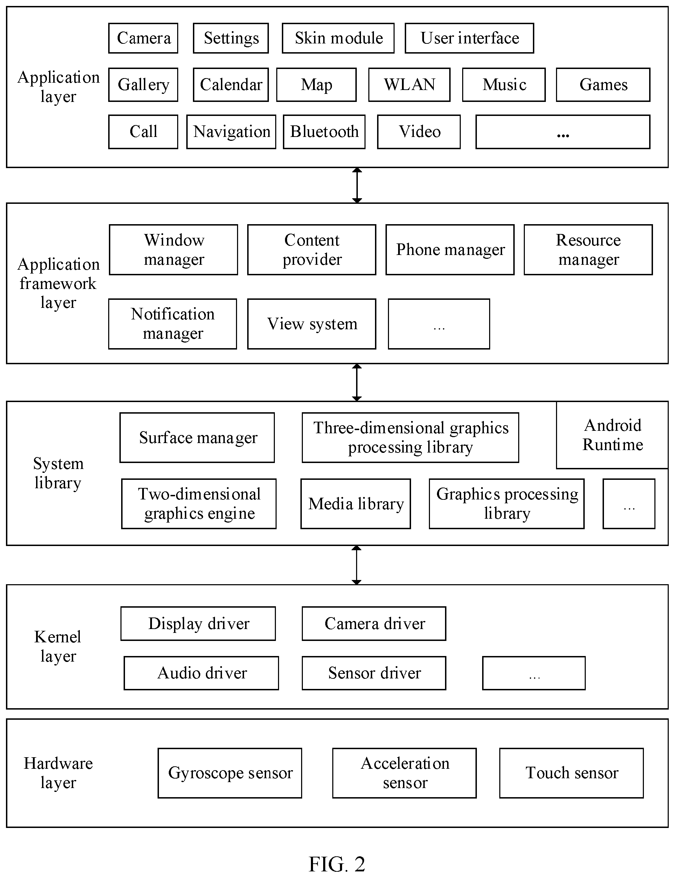

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android Runtime (Android Runtime) and a system library, and a kernel layer from top to bottom. The application layer may include a series of application packages.

As shown in FIG. 2, the application layer may include Camera, Settings, a skin module, a user interface (user interface, UI), a third-party application, and the like. The third-party application may include Gallery, Calendar, Call, Map, Navigation, WLAN, Bluetooth, Music, Video, Messages, and the like.

The application framework layer provides an application programming interface (application programming interface, API) and a programming framework for an application at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls made and received, a browse history and a bookmark, an address book, and the like.

The view system includes visual controls such as a control for displaying a text and a control for displaying a picture. The view system may be configured to construct an application. A display interface may include one or more views.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display, in the status bar, notification information, which may be used for conveying a notification-type message that may automatically disappear after a short stay without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The Android Runtime includes a core library and a virtual machine. The Android Runtime is responsible for scheduling and management of the Android system.

The core library includes two parts: a performance function that needs to be called in Java language and a core library of Android.

The application layer and the application framework layer run in the virtual machine. The virtual machine executes Java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a two-dimensional graphics engine (for example, an SGL). The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The two-dimensional graphics engine is a drawing engine for 2D drawing.

In addition, the system library may further include a status monitoring service module, for example, a physical status recognition module, configured to analyze and recognize a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various sensors, for example, various sensors described in FIG. 1.

With reference to the electronic device described in FIG. 1 and FIG. 2, in this embodiment of this application, the electronic device may be an intelligent device such as a smartphone, a tablet computer, or a smart screen. Physical components related to the electronic device 100 mainly include hardware components such as a sensor, a decision support system (decision support system, DSS) display chip, a touchscreen, and a fingerprint recognition module; kernel software layers such as a screen management module, a display driver, a fingerprint driver, and anti-accidental touch; application framework layer functions such as anti-accidental touch input, screen control, an always on display (always on display, AOD) service, and power management; and application layer services such as a special adaptation application (camera), a third-party application, system sleep, and AOD.

With development of science and technology, the electronic device may provide a personalized service for a user. The user interface of the electronic device may display a virtual image that expresses a status or a requirement of the user, and intelligence, flexibility, matching, and the like of the virtual image are referred to as important criteria for measuring the virtual image. Currently, a manner of displaying a virtual image lacks diversity and is usually based on initial settings of the user or based on a predefined manner of a system. A display result cannot be flexibly adjusted based on a change of a scenario, and is difficult to be associated with a status of the user. Consequently, it is difficult to meet the user's requirement of personalized expression.

Therefore, this application provides a method and an apparatus for displaying a virtual image, and an electronic device. In this method, a status of a user (or a current scenario) may be determined based on information such as time, schedule content, a running condition of an application, and a running condition of an associated device, and a virtual image is displayed, so that the virtual image can intelligently and flexibly help a user to perform personalized expression, thereby enhancing interest of displaying the virtual image, and improving user experience.

For ease of understanding, using a smartphone as an example, the following shows several specific manners of displaying a virtual image based on a current scenario by using examples.

### Scenario 1: A virtual image is displayed based on a time period.

It should be noted that 24 hours of each day may be divided into a specific quantity of time periods, and an action style that is of the virtual image and that corresponds to each time period is preset. The electronic device may display a specific action style of the virtual image in a specific time period, so that the virtual image better conforms to a status of the user in the current time period. The following specifically describes several manners of displaying the virtual image based on a time period.

### 1.1 The electronic device displays the virtual image based on a time period.

For example, the electronic device divides 24 hours of each day into six time periods based on a user habit, sets four styles of the virtual image, and each style of the virtual image corresponds to three actions. The electronic device separately sets styles that are of the virtual image and that correspond to different time periods, and specific actions that may be displayed by the virtual image in the time periods.

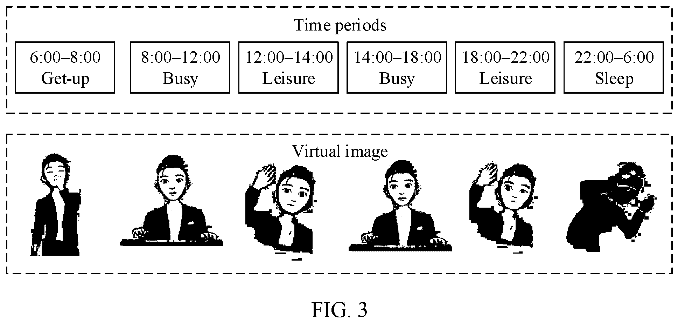

FIG. 3 shows a manner of displaying a virtual image based on a time period. FIG. 3 shows that the electronic device divides 24 hours of each day into six time periods, which are respectively 06:00-08:00, 08:00-12:00, 12:00-14:00, 14:00-18:00, 18:00-22:00, and 22:00-06:00, and the electronic device sets four styles of the virtual image, which are respectively get-up, busy, leisure, and sleep styles. In FIG. 3, action styles of the virtual image in the time periods are shown by using an example. Both 08:00-12:00 in the morning and 14:00-18:00 in the afternoon are set to the busy style, and a specific action corresponding to the busy style in the afternoon may be the same as a specific action corresponding to the busy style in the morning. For ease of understanding, the following describes, by using examples, specific actions that may be set in different styles of the virtual image.

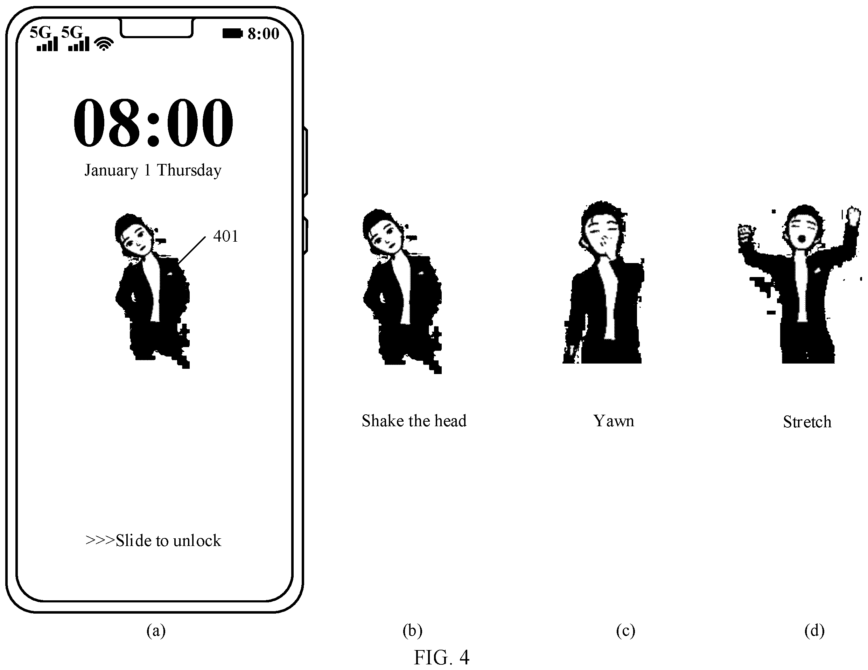

FIG. 4 shows specific actions of a get-up style of the virtual image. The following is described by using a smartphone as an example.

As shown in (a) in FIG. 4, in response to triggering, by the user, the smartphone to turn on the screen, the smartphone displays a lock screen interface, and a virtual image 401 is displayed on the lock screen interface. In addition, current time displayed on the lock screen interface is 8:00, and the time is corresponding to the time period 06:00-08:00. In the time period, a style of the virtual image displayed by the smartphone is getting up, and the virtual image 401 displayed on the lock screen interface displays a specific action "shake the head" in the getting-up style. A specific manner in which the user triggers the smartphone to turn on the screen is not limited in this application. For example, the user taps the screen of the smartphone to trigger screen-on, the user taps a power-on button of the smartphone to trigger screen-on, the user lifts the mobile phone to trigger screen-on, or the user gazes at the screen of the smartphone to trigger screen-on. (b) in FIG. 4, (c) in FIG. 4, and (d) in FIG. 4 respectively show actions of shaking the head, yawning, and stretching, and show three different actions of the get-up style of the virtual image. For example, in a time period corresponding to the get-up style of the virtual image, when the user triggers the smartphone to turn on the screen, the lock screen interface of the smartphone first displays the action of shaking the head by the virtual image shown in (b) in FIG. 4, and then sequentially displays the action of yawning in (c) in FIG. 4 and the action of stretching in (d) in FIG. 4. In a state in which the screen of the smartphone is steady on, the lock screen interface may cyclically display the actions of yawning and stretching by the virtual image. A manner of displaying specific actions corresponding to different styles of the virtual image when the screen of the electronic device is on is not limited in this application. The display manner may be cyclic display of actions other than the first action (which may be understood as an entry action), may be cyclic display of all actions, may be random display of one of the actions, or may be display of one of the actions based on specific time (for example, display of shaking the head at 6:00, display of yawning at 6:30, and display of stretching at 7:00).

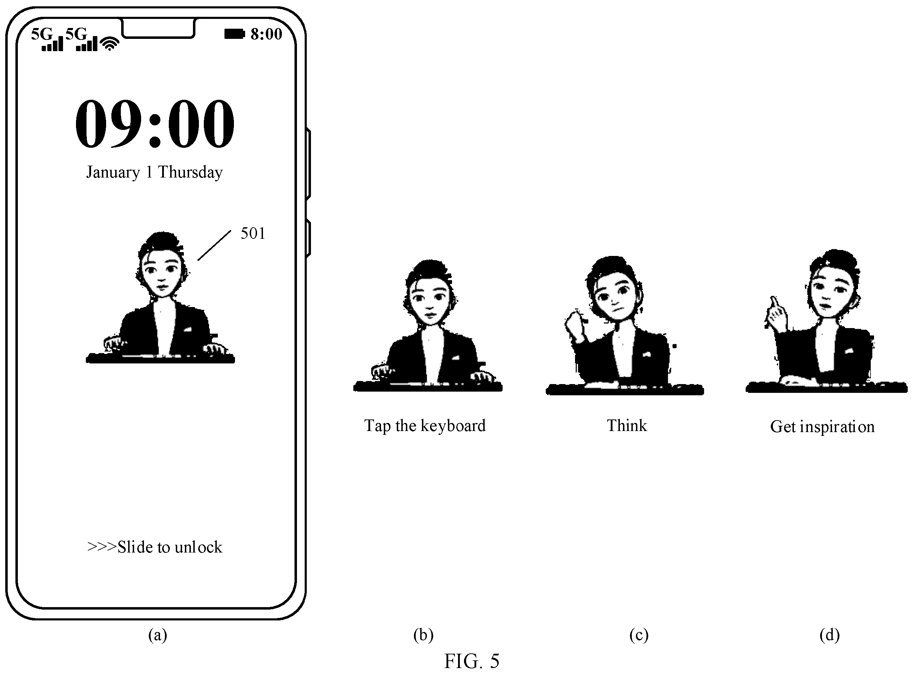

FIG. 5 shows specific actions of a busy style of the virtual image.

As shown in (a) in FIG. 5, in response to triggering, by the user, the smartphone to turn on the screen, the smartphone displays a lock screen interface, and a virtual image 510 is displayed on the lock screen interface. In addition, current time displayed on the lock screen interface is 9:00, and the time is corresponding to the time period 08:00-12:00. In the time period, a style of the virtual image displayed on the smartphone is busy, and the virtual image 501 displayed on the lock screen interface displays a specific action "tap the keyboard" in the busy style.

(b) in FIG. 5, (c) in FIG. 5, and (d) in FIG. 5 respectively show actions of taping the keyboard, thinking, and getting inspiration, and show three different actions of the busy style of the virtual image.

For example, in a time period corresponding to the busy style of the virtual image, when the user triggers the smartphone to turn on the screen, the lock screen interface of the smartphone first displays the action of tapping the keyboard by the virtual image shown in (b) in FIG. 5, and then sequentially displays the action of thinking in (c) in FIG. 5 and the action of getting inspiration in (d) in FIG. 5. In a state in which the screen of the smartphone is steady on, the lock screen interface may cyclically display the actions of thinking and getting inspiration by the virtual image.

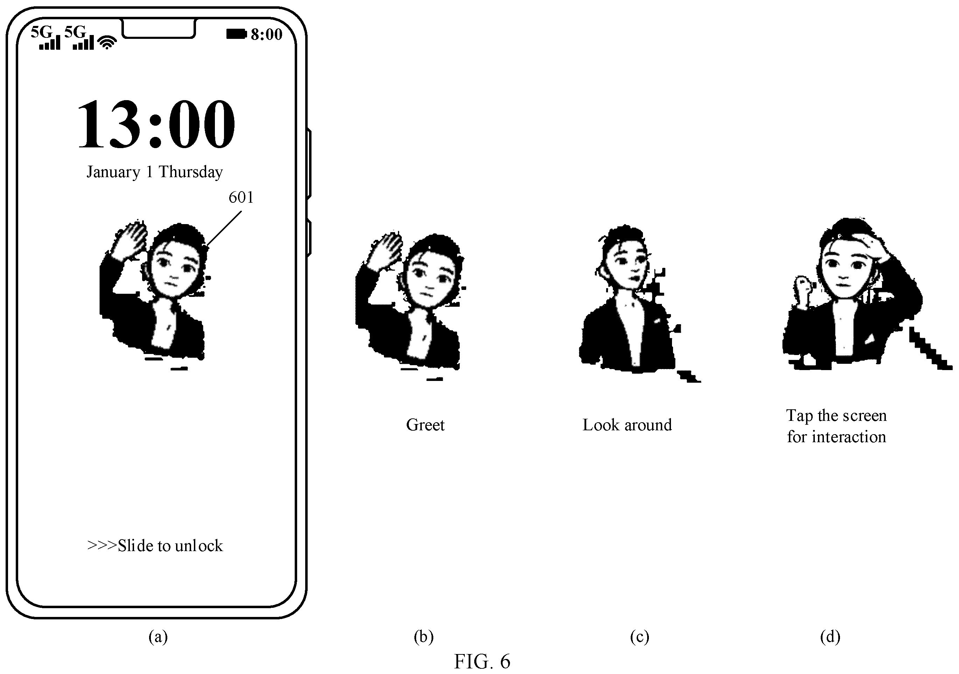

FIG. 6 shows specific actions of a leisure style of the virtual image.

As shown in (a) in FIG. 6, in response to triggering, by the user, the smartphone to turn on the screen, the smartphone displays a lock screen interface, and a virtual image 601 is displayed on the lock screen interface. In addition, current time displayed on the lock screen interface is 13:00, and the time is corresponding to the time period 12:00-14:00. In the time period, a style of the virtual image displayed on the smartphone is leisure, and the virtual image 601 displayed on the lock screen interface displays a specific action "greet" in the leisure style.

(b) in FIG. 6, (c) in FIG. 6, and (d) in FIG. 6 respectively show actions of greeting, looking around, and tapping the screen for interaction, and show three different actions of the leisure style of the virtual image.

For example, in a time period corresponding to the leisure style of the virtual image, when the user triggers the smartphone to turn on the screen, the lock screen interface of the smartphone first displays the action of greeting by the virtual image shown in (b) in FIG. 6, and then sequentially displays the action of looking around in (c) in FIG. 6 and the action of tapping the screen for interaction in (d) in FIG. 6. In a state in which the screen of the smartphone is steady on, the lock screen interface may cyclically display the actions of looking around and tapping the screen for interaction by the virtual image.

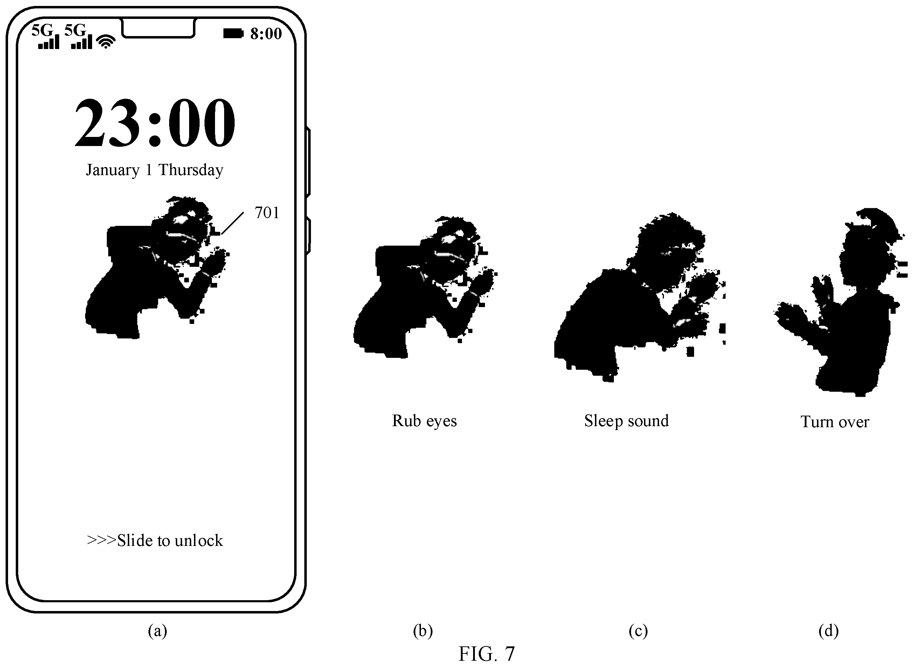

FIG. 7 shows specific actions of a sleep style of the virtual image.

As shown in (a) in FIG. 7, in response to triggering, by the user, the smartphone to turn on the screen, the smartphone displays a lock screen interface, and a virtual image 701 is displayed on the lock screen interface. In addition, current time displayed on the lock screen interface is 23:00, and the time is corresponding to the time period 22:00-06:00. In the time period, a style of the virtual image displayed on the smartphone is sleep, and the virtual image 701 displayed on the lock screen interface displays a specific action "rub eyes" in the sleep style.

(b) in FIG. 7, (c) in FIG. 7, and (d) in FIG. 7 respectively show actions of rubbing eyes, sleeping sound, and turning over, and show three different actions of the sleep style of the virtual image. For example, in a time period corresponding to the sleep style of the virtual image, when the user triggers the smartphone to turn on the screen, the lock screen interface of the smartphone first displays the action of rubbing eyes by the virtual image shown in (b) in FIG. 7, and then sequentially displays the action of sleeping sound in (c) in FIG. 7 and the action of turning over in (d) in FIG. 7. In a state in which the screen of the smartphone is steady on, the lock screen interface may cyclically display the actions of sleeping sound and turning over by the virtual image.

It should be noted that, FIG. 4 to FIG. 7 separately show specific actions separately corresponding to the four styles of the virtual image. A specific manner of setting the time periods, the styles of the virtual image, the actions, and the like by the electronic device includes but is not limited to the foregoing content. To provide a more flexible and personalized service, the electronic device may further refine settings of the time periods and the virtual image, for example, in a manner in the following 1.2.

### 1.2 Specific time periods are refined, to refine a manner of displaying the virtual image.

For example, the electronic device divides 24 hours of each day into 11 time periods in more detail. Correspondingly, 10 styles of the virtual image are set, and each style of the virtual image may also correspond to at least one action. The electronic device separately sets styles that are of the virtual image and that correspond to different time periods, and specific actions that may be displayed by the virtual image in the time periods.

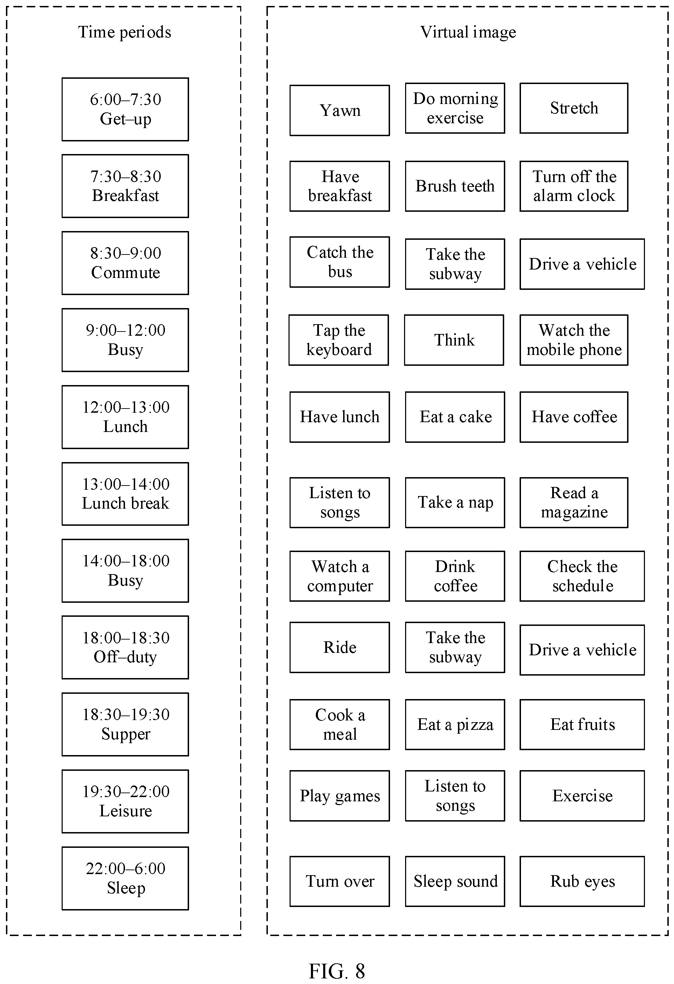

FIG. 8 shows a manner of displaying the virtual image based on refined time periods. FIG. 3 shows that the electronic device divides 24 hours of each day into 11 time periods, which are respectively 06:00-7:30, 7:30-08:30, 08:30-9:00, 9:00-12:00, 12:00-13:00, 13:00-14:00, 14:00-18:00, 18:00-18:30, 18:30-19:30, 19:30-22:00, and 22:00-06:00; and the electronic device sets 10 styles of the virtual image, which are respectively get-up, breakfast, commuting, busy, lunch, lunch break, off-duty, supper, leisure, and sleep styles. In FIG. 8, action styles of the virtual image in the time periods are shown by using an example. For example, a style that is of the virtual image and that corresponds to 06:00-7:30 is getting up, and a specific action may be yawning, doing morning exercise, or stretching. A style that is of the virtual image and that corresponds to 7:30-08:30 is breakfast, and a specific action may be having breakfast, brushing teeth, turning off the alarm clock, or the like.

It should be noted that, for a specific manner in which the electronic device displays the virtual image on the user interface based on the refined time periods, refer to the foregoing descriptions of FIG. 4 to FIG. 7, and details are not described herein again. Based on refinement of the time periods, the styles and the actions of the virtual image are correspondingly refined, so that display of the virtual image is more enriched and can meet the user's personalized expression more flexibly. It should be noted that, in the foregoing manners of displaying the virtual image in 1.1 and 1.2, the electronic device predefines the time periods, and the action styles that are of the virtual image and that correspond to the time periods. To better meet requirements of different users, the user may customize the time periods and the action styles that are of the virtual image and that correspond to the time periods.

### 1.3 The virtual image is displayed based on customization of the user.

For example, the user may implement customized settings of the virtual image by using the user interface of the electronic device.

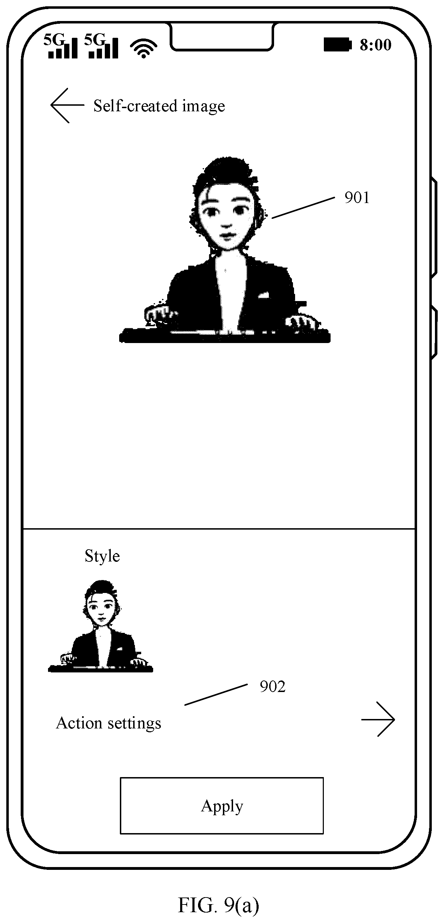

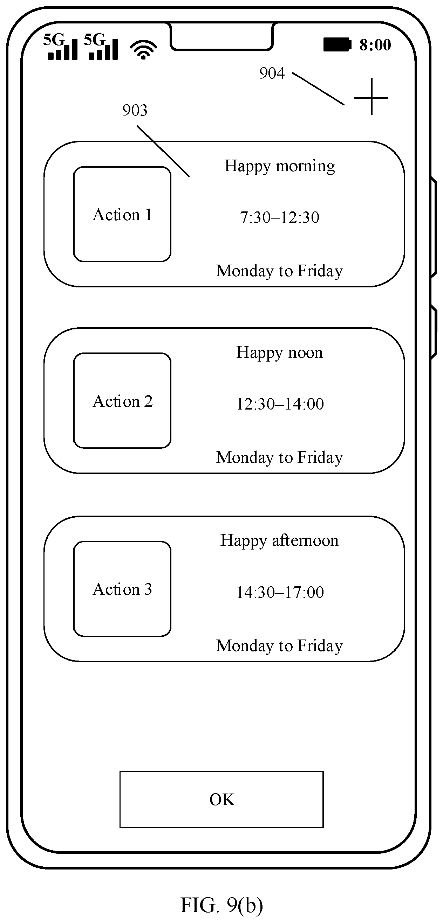

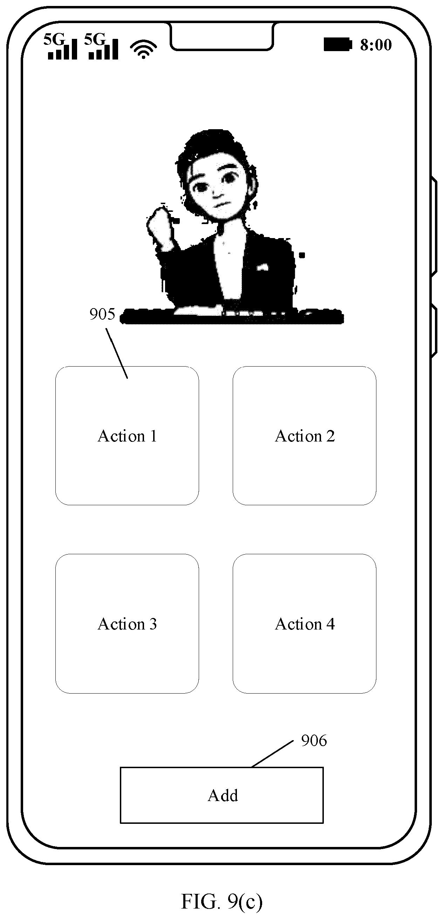

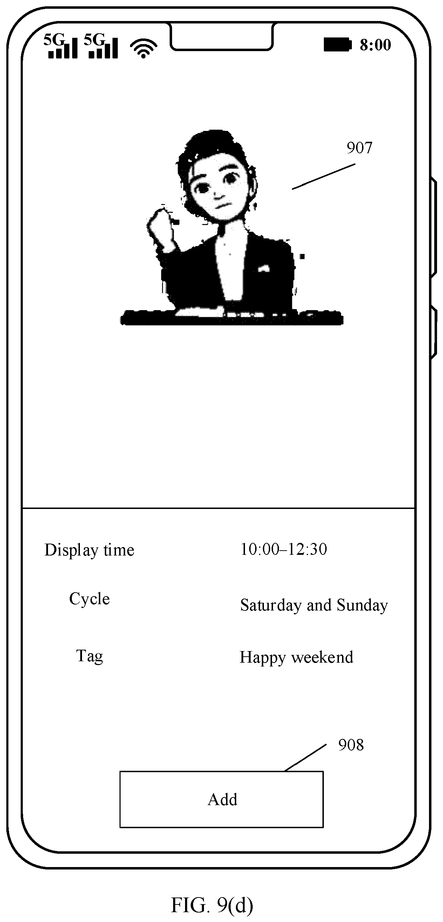

FIG. 9(a), FIG. 9(b), FIG. 9(c), and FIG. 9(d) show a manner of customizing a virtual image by a user. By using an example in which the electronic device is a smartphone, the following specifically describes a manner of customizing the virtual image by the user.

FIG. 9(a) shows a self-created image interface of the smartphone. The self-created image interface includes a virtual image 901. A bottom of the interface includes an action setting control 902. A control is a visual graphical interface element presented to the user, and is a software component included in an application, and controls data processed by the application and an interaction operation about the data. The user may interact with the control through an operation such as touch or slide, to read and edit related information of the application. Generally, the control may include visual interface elements such as an icon, a button, a menu, a tab, a text box, and a status bar. In response to an operation (for example, a touch operation or a tap operation) performed by the user on different controls, different interfaces may be displayed on the screen of the electronic device.

In response to an operation of tapping the action setting control 902 by the user, the smartphone may display a graphical user interface (graphical user interface, GUI) shown in FIG. 9(b).

As shown in FIG. 9(b), the smartphone displays an action setting interface in response to the operation of tapping the action setting control 902 by the user. When the user customizes the virtual image, the interface displays an action style list, where the action style list includes an action style tag, for example, an action style tag 903. When the user does not customize the virtual image, no action style list is displayed on the interface. The interface further displays an adding control 904. In response to an operation of tapping the adding control 904 by the user, the smartphone may display a GUI shown in FIG. 9(c).

As shown in FIG. 9(c), the smartphone displays an action selection interface in response to the operation of tapping the adding control 904 by the user. The interface displays a plurality of action controls, for example, an action 1 control 905. Different action controls correspond to different actions of the virtual image. The interface further displays an adding control 906. In response to an operation of tapping the action 1 control 905 and then tapping the adding control 906 by the user, the smartphone may display a GUI shown in FIG. 9(d).

As shown in FIG. 9(d), in response to an operation of tapping the action 1 control 905 and then tapping the adding control 906 by the user, the smartphone may display a setting interface of the action 1. The interface displays a virtual image 907 corresponding to the action 1 control 905, and the user may preview the virtual image 907 by using the interface. In addition, a plurality of controls, for example, display time, a cycle, a tag, and an adding control, are displayed at the bottom of the interface. The user may customize the display time, the cycle, and the like of the virtual image 907 through an operation such as tapping the controls. For example, the display time of the virtual image 907 is 10:00-12:30, and the display cycle is every Saturday and every Sunday. The user may also name the virtual image 907 by using the tag control, for example, the name of the virtual image 906 is "Happy weekend". In response to an operation of tapping an adding control 908 by the user, customization of the virtual image 907 is completed. Setting parameters (for example, an action, a tag, a display time and cycle, and the like) of the virtual image 907 that are obtained after the customization is completed may be displayed as an action style tag in the action style list shown in FIG. 9(b).

### Scenario 2: A virtual image is displayed based on a user schedule.

For example, the electronic device may display, based on a daily schedule of the user, a virtual image that conforms to the current user schedule.

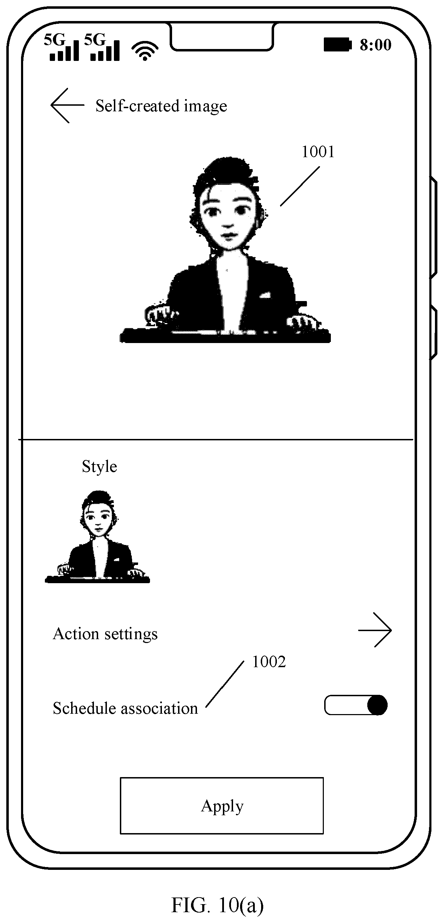

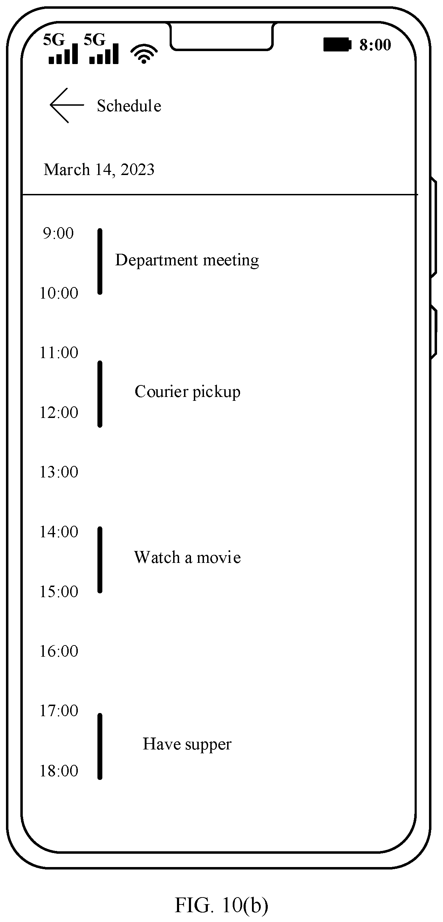

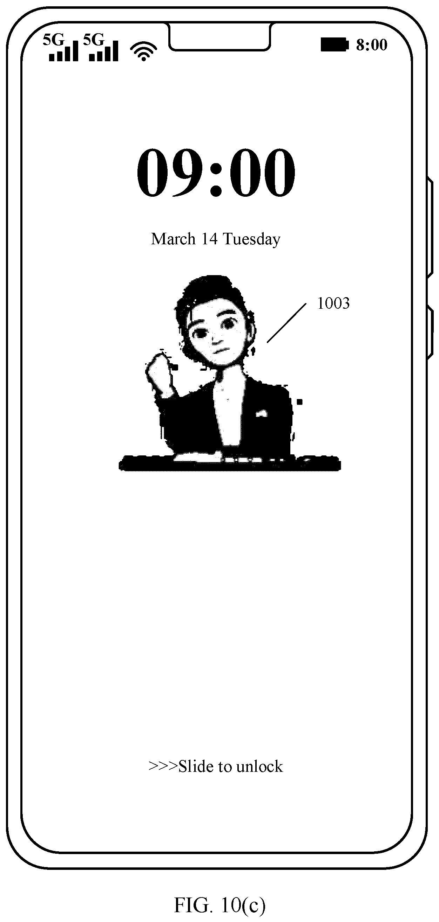

FIG. 10(a), FIG. 10(b), and FIG. 10(c) show a manner of displaying a virtual image based on a user schedule. By using an example in which the electronic device is a smartphone, the following specifically describes a manner of displaying a virtual image associated with a user schedule.

FIG. 10(a) shows a self-created image interface of the smartphone. The self-created image interface includes a virtual image 1001. A bottom of the interface includes a schedule association control 1002. In response to an operation of tapping the schedule association control 1002 by the user, the smartphone may obtain the user schedule, and display the virtual image based on the user schedule.

FIG. 10(b) shows a schedule interface of the smartphone. The interface displays specific schedules of the user on a day, for example, 9:00-10:00 department meeting, 11:00-12:00 express pickup, 14:00-15:00 movie watching, and 17:00-18:00 supper. When a current schedule obtained by the smartphone is the department meeting, the smartphone displays a GUI shown in FIG. 10(c).

As shown in FIG. 10(c), in response to that the current schedule is the department meeting, the lock screen interface of the smartphone displays a virtual image 1003, and an action style of the virtual image 1003 is presented as a meeting state.

The smartphone may further display different action styles of the virtual image based on other schedules of the user. For example, when the smartphone obtains an express pickup schedule, the virtual image may be presented as a pickup state of a courier; when the smartphone obtains a travel schedule of the user, the virtual image may be presented as a state of catching the bus or taking a vehicle by the user; when the smartphone obtains a movie watching schedule of the user, the virtual image may be presented as a state of watching a movie; and when the smartphone obtains a supper schedule of the user, the virtual image may be presented as a state of dining in a restaurant.

### Scenario 3: A virtual image is displayed based on a running condition of an application.

For example, the electronic device may display, based on the running condition of an application (Application, App), a virtual image corresponding to a running event.

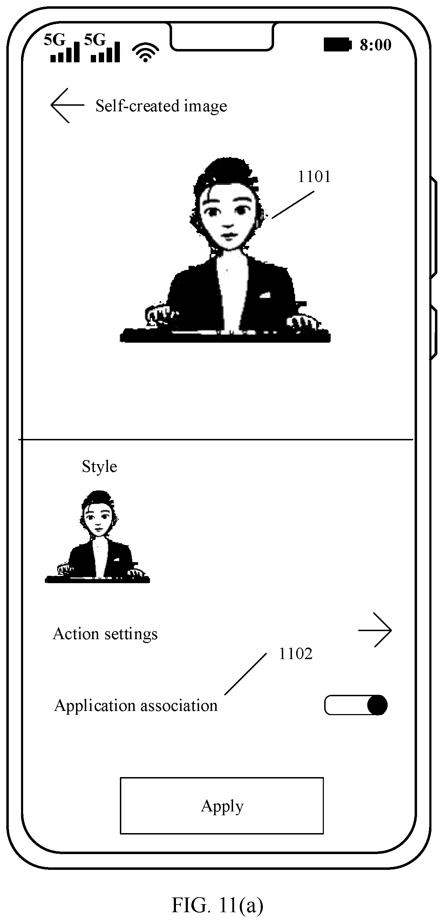

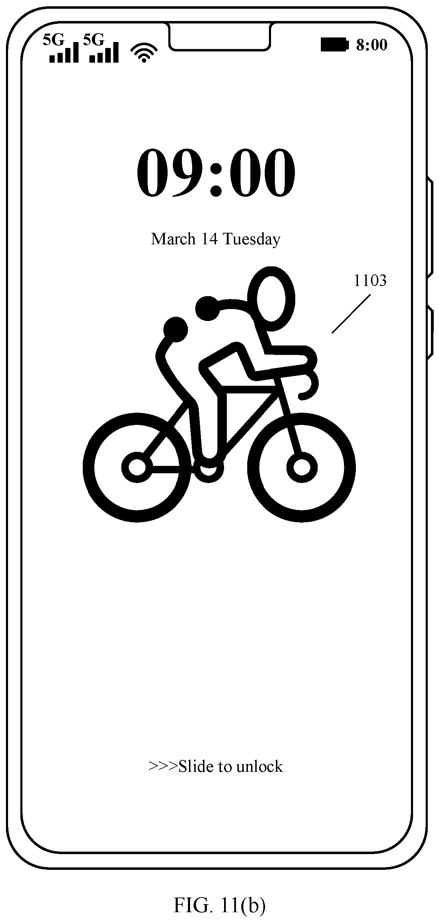

FIG. 11(a) and FIG. 11(b) show a manner of displaying a virtual image based on a running condition of an application. By using an example in which the electronic device is a smartphone, the following specifically describes a manner of displaying a virtual image associated with an application.

FIG. 11(a) shows a self-created image interface of the smartphone. The self-created image interface includes a virtual image 1101. A bottom of the interface includes an application association control (or an intelligent display control) 1102. In response to an operation of tapping the application association control 1102 by the user, the smartphone may obtain a running condition of the application, and display the virtual image based on the running condition of the application. The application may be understood as an application that is running on the smartphone, for example, a sports App, a music App, a food delivery App, or an express delivery App.

As shown in FIG. 11(b), in response to that a state that is of the sports App and that is obtained by the smartphone is that the user is exercising, the lock screen interface of the smartphone displays a virtual image 1103, and an action style of the virtual image 1103 is presented as an exercise state (for example, cycling or running).

The smartphone may further display different action styles of the virtual image based on running conditions of other applications. For example, when the smartphone obtains an event that an order has been placed and coffee is being made from the coffee App, the virtual image may be presented as a state of making coffee; when the smartphone obtains a music playing event from the music App, the virtual image may be presented as a state of listening to songs; when the smartphone obtains a reading event from the reading App, the virtual image may be presented as a reading state; when the smartphone obtains an event that food is being delivered from the food delivery App, the virtual image may be presented as a state of delivering food by a food delivery driver; and when the smartphone obtains an event that a package is being delivered from the express delivery App, the virtual image may be presented as a state of delivering the food by the courier.

### Scenario 4: A virtual image is displayed based on information obtained by the associated device.

For example, the electronic device may display, based on a running condition of the associated device, a virtual image corresponding to a running event. A specific manner of associating the electronic device with the associated device is not limited in this application. For example, the electronic device and the associated device may be devices in a same mobile hotspot (wireless fidelity, Wi-Fi); or the electronic device and the associated device may be same user equipment; or the associated device is set to a device of interest by the electronic device; or the electronic device and the associated device are connected through Bluetooth; or the like.

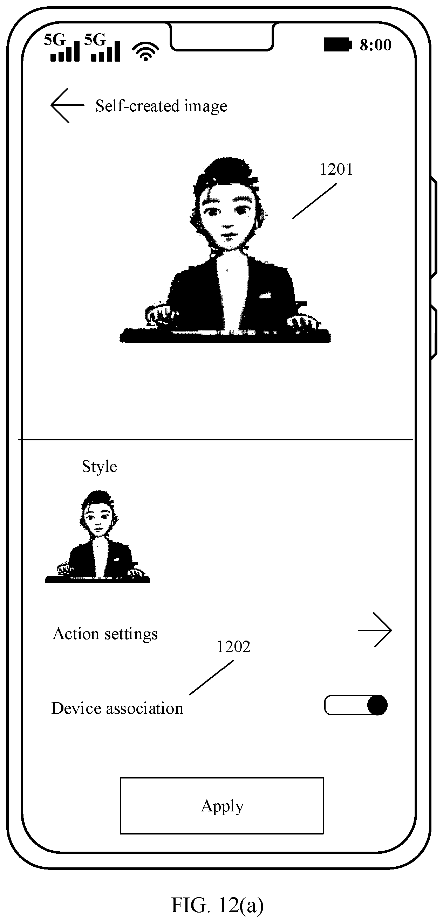

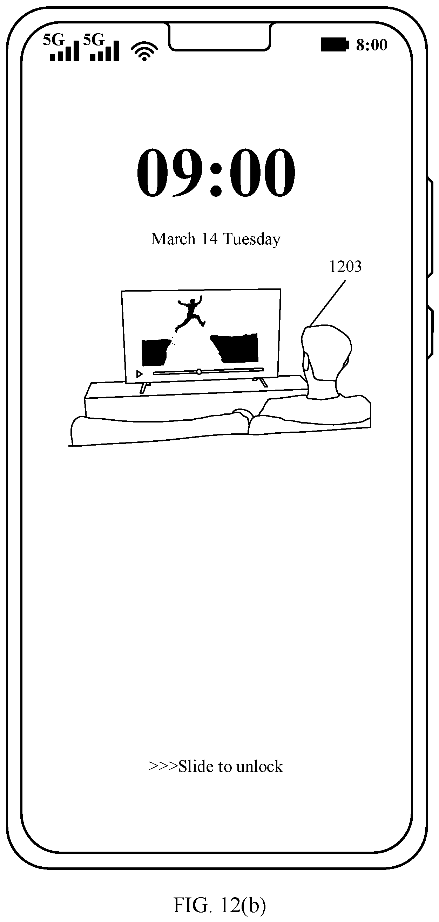

FIG. 12(a) and FIG. 12(b) show a manner of displaying a virtual image based on a running condition of an associated device. By using an example in which the electronic device is a smartphone, the following specifically describes a manner of displaying a virtual image based on an associated device.

FIG. 12(a) shows a self-created image interface of the smartphone. The self-created image interface includes a virtual image 1201. A bottom of the interface includes a device association control (or an intelligent display control) 1202. In response to an operation of tapping the device association control 1102 by the user, the smartphone may obtain a running condition of the associated device, and display the virtual image based on the running condition of the associated device. The associated device may be an intelligent device that can be communicatively connected to the smartphone, for example, a smart screen, a personal computer, a tablet computer, a Bluetooth headset, a sports bracket, or an in-vehicle infotainment terminal.

As shown in FIG. 12(b), in response to that the smartphone is associated with the smart screen and obtains that the smart screen is playing a video, the lock screen interface of the smartphone displays a virtual image 1203, and an action style of the virtual image 1203 is presented as a state in which the user watches the video by using the smart screen.

The smartphone may further display different action styles of the virtual image based on running conditions of other associated devices. For example, when the associated device is the sports bracelet, the smartphone correspondingly displays the virtual image as a moving or sleeping state of the user based on information that is obtained by the sports bracelet and that the user is moving or sleeping; or when the associated device is the in-vehicle infotainment terminal, the smartphone correspondingly displays the virtual image as a driving state of the user based on information that is obtained by the in-vehicle infotainment terminal and that the user is driving a vehicle.

It should be noted that the manner of displaying the virtual image based on the running condition of the application in the scenario 3 and the manner of displaying the virtual image based on the running condition of the associated device in the scenario 4 may be combined. For example, a device associated with the smartphone may be displayed in an AI Life App carried by the smartphone, and the smartphone may obtain a running state of the associated device by using the AI Life App, to display an action style of a corresponding virtual image.

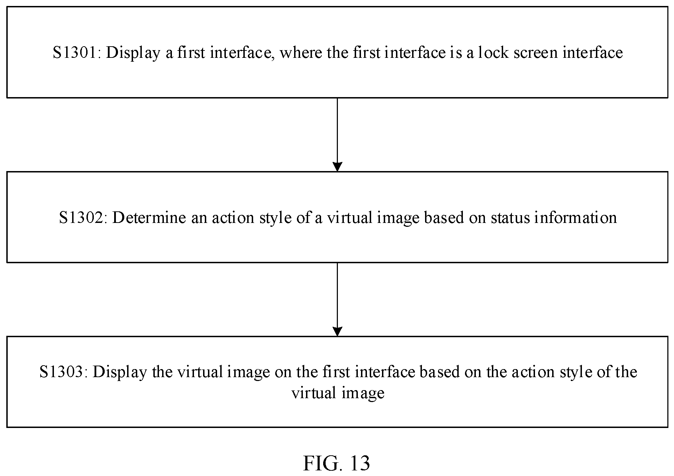

FIG. 13 shows a method for displaying a virtual image according to an embodiment of this application. The method may be applied to an electronic device such as a smartphone, a personal computer, or a tablet computer. The following describes the method 1300 in detail.

S1301: Display a first interface, where the first interface is a lock screen interface.

For example, a first electronic device displays the first interface. The first electronic device may be an electronic device such as a smartphone, a personal computer, or a tablet computer. The first interface may be a lock screen interface shown in (a) in FIG. 4.

S1302: Determine an action style of the virtual image based on status information.

S1303: Display the virtual image on the first interface based on the action style of the virtual image. In an implementation, before the first electronic device displays the virtual image on the first interface, the first electronic device may display a second interface in response to a first operation of a user, where the second interface is used to set the virtual image.

For example, the second interface may be the self-created image interface shown in FIG. 9(a), and the user may set the virtual image on the self-created image interface in an interactive manner.

It should be noted that the first operation of triggering the first electronic device to display the second interface is not limited in this embodiment of this application. For example, the user may trigger display of the second interface by touching and holding the virtual image displayed on the first interface; or the user may trigger display of the second interface by using a system setting application of the first electronic device.

For example, the status information includes at least one of the following: time information, schedule information, application running data of the first electronic device, and running data of a second electronic device.

The time information may be understood as current actual time. For example, when the current time is 7:00, the first electronic device determines that a time period to which the current actual time belongs is 6:00-8:00, and the first electronic device determines, based on the time period, an action style that is of the virtual image and that corresponds to the time period.

In an implementation, when the status information is the time information, before determining the action style of the virtual image based on the status information, the first electronic device sets at least one time period, where the at least one time period corresponds to the action style of the virtual image, the action style of the virtual image includes a style of the virtual image and an action of the virtual image, and the style of the virtual image corresponds to the action of the virtual image.

In an implementation, setting the at least one time period includes: presetting the at least one time period; or customizing, by the user, the at least one time period.

For example, a specific manner in which the first electronic device determines the at least one time period may be presetting the at least one time period, as shown in FIG. 3 and FIG. 8, or may be customizing the at least one time period by the user, as shown in FIG. 9(a), FIG. 9(b), FIG. 9(c), and FIG. 9(d).

For example, the first electronic device presets six time periods and four styles of the virtual image in the manner shown in FIG. 3, and three actions of the virtual image are preset for each style of the virtual image. Each time period may correspond to one of the styles of the virtual image, and correspondingly corresponds to three actions of the virtual image. The first electronic device may alternatively preset 11 time periods and 10 styles of the virtual image in the manner shown in FIG. 8, and at least one action of the virtual image is preset for each style of the virtual image.

In an implementation, when the user customizes the at least one time period, the first electronic device displays a third interface in response to an operation of the user on a first setting control on the second interface, where the third interface displays a second setting control; displays a fourth interface in response to an operation of the user on the second setting control, where the fourth interface displays a first action control and a third setting control; and displays a fifth interface in response to an operation of the user on the first action control and an operation of the user on the third setting control, where the fifth interface displays a preview of the virtual image.

For example, the first setting control may be understood as an action setting control 901 shown in FIG. 9(a), the third interface may be understood as an action setting interface shown in FIG. 9(b), the second setting control may be understood as an adding control 904 shown in FIG. 9(b), the fourth interface may be understood as an action selection interface shown in FIG. 9(c), the first action control may be understood as an action 1 control 905 shown in FIG. 9(c), the third setting control may be understood as an adding control 906 shown in FIG. 9(c), the fifth interface may be understood as an action 1 setting interface shown in FIG. 9(d), and the preview of the virtual image may be understood as a virtual image 907 shown in FIG. 9(d).

In an implementation, when the status information is the schedule information, before determining the action style of the virtual image based on the status information, the first electronic device obtains the schedule information, where the schedule information includes time information and user behavior information. When the time information matches current time, it is determined that the action style of the virtual image is an action style that matches the user behavior information. In other words, the first electronic device may automatically obtain the schedule information by using the system. The user behavior information may reflect a current state of the user, for example, watching a movie or having a meal.

In an implementation, when the status information is the schedule information, before determining the action style of the virtual image based on the status information, the first electronic device obtains the schedule information in response to an operation of the user on a fourth setting control on the second interface.

For example, the fourth setting control may be understood as a schedule association control 1002 shown in FIG. 10(a).

In an implementation, when the status information is the application running data of the first electronic device, before determining the action style of the virtual image based on the status information, the first electronic device obtains the application running data of the first electronic device, where the application running data of the first electronic device includes status information about using an application of the first electronic device by a user; and when the application of the first electronic device runs, determines that the action style of the virtual image is an action style that matches the status information about using the application of the first electronic device by the user.

In other words, the first electronic device may automatically obtain the application running data of the first electronic device by using the system. The status information about using the application of the first electronic device by the user may reflect a current state of the user.

In an implementation, when the status information is the application running data of the first electronic device, before determining the action style of the virtual image based on the status information, the first electronic device obtains the application running data of the first electronic device in response to an operation of the user on a fifth setting control on the second interface. For example, the fifth setting control may be understood as an application association control 1102 shown in FIG. 11(a).

In an implementation, when the status information is the running data of the second electronic device, before determining the action style of the virtual image based on the status information, the first electronic device obtains the running data of the second electronic device, where the running data of the second electronic device includes status information about using the second electronic device by a user; and when the second electronic device runs, determines that the action style of the virtual image is an action style that matches the status information about using the second electronic device by the user.

In other words, the first electronic device may automatically obtain the running data of the second electronic device by using the system. The status information about using the second electronic device by the user may reflect a current state of the user.

In an implementation, when the status information is the running data of the second electronic device, before determining the action style of the virtual image based on the status information, the first electronic device obtains the running data of the second electronic device in response to an operation of the user on a sixth setting control on the second interface.

For example, the sixth setting control may be understood as a setting association control 1202 shown in FIG. 12(a). The second electronic device is a device associated with the first electronic device. For example, when the first electronic device is a smartphone, the second electronic device may be an electronic device associated with the first electronic device, such as a smart screen, a sports bracelet, a personal computer, or a tablet computer.

It should be noted that the time information, the schedule information, the application running data of the first electronic device, and the running data of the second electronic device may be used to determine a status of the user, for example, the user is in a motion state, a sleep state, or a working state. The virtual image displayed by the electronic device based on the status information can reflect the status of the user more intelligently and vividly, and help the user complete personalized expression. In addition, the status information may be used to determine the action style of the virtual image independently, or may be combined to determine the action style of the virtual image. A specific manner of determining the action style of the virtual image is not described herein again, and reference may be made to the foregoing descriptions of FIG. 3 to FIG. 12(a) and FIG. 12(b). According to the method for displaying a virtual image provided in this embodiment of this application, the status of the user may be determined based on information status information such as the time information, the schedule information, the application running data of the first electronic device, and the running data of the second electronic device, and the virtual image reflecting the current state of the user is displayed, to meet the user's requirement of personalized expression and enhance interest of displaying the virtual image.

An embodiment of this application provides a computer program product. When the computer program product is run on a device, the device is enabled to perform the technical solutions of the foregoing embodiments. The implementation principles and technical effects thereof are similar to those in the method-related embodiment, and details are not described herein again.

An embodiment of this application provides a readable storage medium. The readable storage medium includes instructions. When the instructions are run on a device, the device is enabled to perform the technical solutions of the foregoing embodiment. The implementation principles and technical effects thereof are similar, and details are not described herein again.

An embodiment of this application provides a chip. The chip is configured to execute instructions. When the chip runs, the technical solutions in the foregoing embodiment are performed. The implementation principles and technical effects thereof are similar, and details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing apparatus and units (modules), refer to a corresponding process in the foregoing method embodiment, and details are not described herein again.

In the several embodiments provided in this application, it should be understood that the disclosed device, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the foregoing functions are implemented in the form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for displaying a virtual image, wherein the method is applied to a first electronic device, and the method comprises:
displaying a first interface, wherein the first interface is a lock screen interface;
determining an action style of the virtual image based on status information, wherein the status information comprises at least one of the following:
time information, schedule information, application running data of the first electronic device, and running data of a second electronic device; and
displaying the virtual image on the first interface based on the action style of the virtual image.

2. The method according to claim 1, wherein before displaying the virtual image on the first interface, the method further comprises:
displaying a second interface in response to a first operation of a user, wherein the second interface is used to set the virtual image.

3. The method according to claim 2, wherein when the status information is the time information, before determining the action style of the virtual image based on the status information, the method further comprises:
setting at least one time period, wherein the at least one time period corresponds to the action style of the virtual image, the action style of the virtual image comprises a style of the virtual image and an action of the virtual image, and the style of the virtual image corresponds to the action of the virtual image.

4. The method according to claim 3, wherein setting the at least one time period comprises:
presetting the at least one time period; or
customizing, by the user, the at least one time period.

5. The method according to claim 4, wherein when the user customizes the at least one time period, the method further comprises:
displaying a third interface in response to an operation of the user on a first setting control on the second interface, wherein the third interface displays a second setting control;
displaying a fourth interface in response to an operation of the user on the second setting control, wherein the fourth interface displays a first action control and a third setting control; and
displaying a fifth interface in response to an operation of the user on the first action control and an operation of the user on the third setting control, wherein the fifth interface displays a preview of the virtual image.

6. The method according to claim 1, wherein when the status information is the schedule information, before determining the action style of the virtual image based on the status information, the method further comprises:
obtaining the schedule information, wherein the schedule information comprises time information and user behavior information; and
determining the action style of the virtual image based on the status information comprises: when the time information matches current time, determining that the action style of the virtual image is an action style that matches the user behavior information.

7. The method according to claim 2, wherein when the status information is the schedule information, before determining the action style of the virtual image based on the status information, the method further comprises:
obtaining, by the first electronic device, the schedule information in response to an operation of the user on a fourth setting control on the second interface.

8. The method according to claim 1, wherein when the status information is the application running data of the first electronic device, before determining the action style of the virtual image based on the status information, the method further comprises:
obtaining the application running data of the first electronic device, wherein the application running data of the first electronic device comprises status information about using an application of the first electronic device by a user; and
determining the action style of the virtual image based on the status information comprises: when the application of the first electronic device runs, determining that the action style of the virtual image is an action style that matches the status information about using the application of the first electronic device by the user.

9. The method according to claim 2, wherein when the status information is the application running data of the first electronic device, before determining the action style of the virtual image based on the status information, the method further comprises:
obtaining, by the first electronic device, the application running data of the first electronic device in response to an operation of the user on a fifth setting control on the second interface.

10. The method according to claim 1, wherein when the status information is the running data of the second electronic device, before determining the action style of the virtual image based on the status information, the method further comprises:
obtaining the running data of the second electronic device, wherein the running data of the second electronic device comprises status information about using the second electronic device by a user; and
determining the action style of the virtual image based on the status information comprises: when the second electronic device runs, determining that the action style of the virtual image is an action style that matches the status information about using the second electronic device by the user.

11. The method according to claim 2, wherein when the status information is the running data of the second electronic device, before determining the action style of the virtual image based on the status information, the method further comprises:
obtaining, by the first electronic device, the running data of the second electronic device in response to an operation of the user on a sixth setting control on the second interface, wherein the second electronic device is associated with the first electronic device.

12. A first electronic device, comprising:
one or more processors; and
one or more memories, wherein
the one or more memories store one or more computer programs, the one or more computer programs comprise instructions, and when the instructions are executed by the one or more processors, the first electronic device is enabled to perform the following steps:
displaying a first interface, wherein the first interface is a lock screen interface;
determining an action style of the virtual image based on status information, wherein the status information comprises at least one of the following:
time information, schedule information, application running data of the first electronic device, and running data of a second electronic device; and
displaying the virtual image on the first interface based on the action style of the virtual image.

13. The first electronic device according to claim 12, wherein when the instructions are executed by the one or more processors, the first electronic device is enabled to perform the following steps:
before displaying the virtual image on the first interface,
displaying a second interface in response to a first operation of a user, wherein the second interface is used to set the virtual image.

14. The first electronic device according to claim 13, wherein when the instructions are executed by the one or more processors, the first electronic device is enabled to perform the following steps:
when the status information is the time information, before determining the action style of the virtual image based on the status information,
setting at least one time period, wherein the at least one time period corresponds to the action style of the virtual image, the action style of the virtual image comprises a style of the virtual image and an action of the virtual image, and the style of the virtual image corresponds to the action of the virtual image.

15. The first electronic device according to claim 14, wherein the at least one time period is set, and when the instructions are executed by the one or more processors, the first electronic device is enabled to perform the following steps:
presetting the at least one time period; or
customizing, by the user, the at least one time period.

16. The first electronic device according to claim 15, wherein when the instructions are executed by the one or more processors, the first electronic device is enabled to perform the following steps:
when the user customizes the at least one time period, displaying a third interface in response to an operation of the user on a first setting control on the second interface, wherein the third interface displays a second setting control;
displaying a fourth interface in response to an operation of the user on the second setting control, wherein the fourth interface displays a first action control and a third setting control; and
displaying a fifth interface in response to an operation of the user on the first action control and an operation of the user on the third setting control, wherein the fifth interface displays a preview of the virtual image.

17. The first electronic device according to claim 12, wherein when the instructions are executed by the one or more processors, the first electronic device is enabled to perform the following steps:
when the status information is the schedule information, before determining the action style of the virtual image based on the status information,
obtaining the schedule information, wherein the schedule information comprises time information and user behavior information; and
when the time information matches current time, determining that the action style of the virtual image is an action style that matches the user behavior information.

18. The first electronic device according to claim 13, wherein when the instructions are executed by the one or more processors, the first electronic device is enabled to perform the following steps:
when the status information is the schedule information, before determining the action style of the virtual image based on the status information,
obtaining, by the first electronic device, the schedule information in response to an operation of the user on a fourth setting control on the second interface.

19. The first electronic device according to claim 12, wherein when the instructions are executed by the one or more processors, the first electronic device is enabled to perform the following steps:
when the status information is the application running data of the first electronic device, before determining the action style of the virtual image based on the status information,
obtaining the application running data of the first electronic device, wherein the application running data of the first electronic device comprises status information about using an application of the first electronic device by a user; and
when the application of the first electronic device runs, determining that the action style of the virtual image is an action style that matches the status information about using the application of the first electronic device by the user.

20. The first electronic device according to claim 13, wherein when the instructions are executed by the one or more processors, the first electronic device is enabled to perform the following steps:
when the status information is the application running data of the first electronic device, before determining the action style of the virtual image based on the status information,
obtaining, by the first electronic device, the application running data of the first electronic device in response to an operation of the user on a fifth setting control on the second interface.

21. The first electronic device according to claim 12, wherein when the instructions are executed by the one or more processors, the first electronic device is enabled to perform the following steps:
when the status information is the running data of the second electronic device, before determining the action style of the virtual image based on the status information,
obtaining the running data of the second electronic device, wherein the running data of the second electronic device comprises status information about using the second electronic device by a user; and
when the second electronic device runs, determining that the action style of the virtual image is an action style that matches the status information about using the second electronic device by the user.

22. The first electronic device according to claim 13, wherein when the instructions are executed by the one or more processors, the first electronic device is enabled to perform the following steps:
when the status information is the running data of the second electronic device, before determining the action style of the virtual image based on the status information,
obtaining, by the first electronic device, the running data of the second electronic device in response to an operation of the user on a sixth setting control on the second interface, wherein the second electronic device is associated with the first electronic device.

23. An apparatus for displaying a virtual image, comprising modules configured to perform the method according to any one of claims 1 to 11.

24. An apparatus for displaying a virtual image, comprising a processor coupled to a memory, wherein the memory is configured to store a computer program, and the processor is configured to run the computer program, so that the apparatus for displaying a virtual image performs the method according to any one of claims 1 to 11.

25. The apparatus for displaying a virtual image according to claim 24, further comprising one or both of the memory and a transceiver, and the transceiver is configured to receive a signal and/or send a signal.

26. A computer-readable storage medium, wherein the computer-readable storage medium comprises a computer program or instructions; and when the computer program or instructions are run on a computer, the method according to any one of claims 1 to 11 is performed.

27. A computer program product, wherein the computer program product comprises a computer program or instructions, and when the computer program or instructions are run on a computer, the method according to any one of claims 1 to 11 is performed.
